# EUROPEAN PATENT APPLICATION

(11) **EP 1 216 876 A2**
(43) Date of publication of application: **26.06.2002**
(21) Application number: 01127551.8
(22) Date of filing: 19.11.2001
(51) Int. Cl.: B60K 26/00

(54) **Operator interface system**

(30) Priority: 22.12.2000 US 258177; 09.10.2001 US 973266
(71) Applicant: Caterpillar Inc., Peoria Illinois 61629-6940 (US)
(72) Inventor: Cannon, Howard N., Intellectual Property Dept., Peoria, Illinois 61629-6490 (US); Cronin, Michael G., Intellectual Property Dept., Peoria, Illinois 61629-6490 (US); Hopkins, Michael F., Intellectual Property Dept., Peoria, Illinois 61629-6490 (US); Strashny, Igor, Intellectual Property Dept., Peoria, Illinois 61629-6490 (US)
(74) Representative: Wagner, Karl H., Dipl.-Ing.

(57) **Abstract**

In the operation of work machines it has been a problem to control the work machine's velocity aspects such as velocity, acceleration, deceleration and jerk because of the plurality of operator interfaces required for such control. The present invention provides an operator interface system for a work machine in which a first pedal is displaceable from a neutral position, and a sensor is operatively coupled with the first pedal and is operable to output a displacement signal corresponding to a location of the first pedal. An electronic controller receives the displacement signal and provides a pre-determined control to a velocity aspect of the work machine in response to the displacement signal.

## Description

### Technical Field

This invention relates to an operator interface system for a work machine and, more particularly, to an operator interface system which uses foot operated pedals to control different velocity aspects of the work machine.

### Background

In the operation of modem day construction machines, control of various velocity aspects of the work machine such as acceleration, deceleration, machine speed, and sudden changes in acceleration or deceleration, or jerk, are oftentimes controlled through a plurality of operator interface devices. For example, driving a conventional wheel loader requires the operator to administer to an assortment of input devices such as the throttle pedal, impeller clutch/brake pedal, brake pedals, toggle and other types of switches, steering wheel or joystick, implement levers or joystick, and other interface controls. The necessity for the work machine operator to manipulate the aforementioned interface controls may not only make it difficult for a new operator to become efficient quickly in operating a particular machine, but also may result in erratic operation of the work machine if the operator fails to properly orchestrate the numerous interface controls.

One prior art example of a pedal control system for a work vehicle can be found in U.S. Patent No. 5,231,891 issued on 03 August 1993 to Shigeru Morita et al.. In this design, a dual pedal arrangement is used to provide a change speed function in which one pedal is coupled to the transmission via mechanical linkages and the other pedal is coupled to the first pedal. While this design may be adequate for its intended purpose, it fails to teach the use of a means to provide pre-determined control of the machines velocity, acceleration, deceleration and jerk.

The present invention is directed to overcoming one or more of the problems as set forth above.

### Summary of the Invention

In one aspect of the present invention, an operator interface system for a work machine is provided in which a sensor is operatively coupled with a first pedal and is operable to output a displacement signal corresponding to a location of the first pedal. An electronic controller receives the displacement signal and controls a velocity aspect of the work machine in response to the displacement signal.

In another aspect of the present invention, there is provided a method for controlling locomotion characteristics of a work machine. The method includes the steps of (1) providing at least one pedal displaceable from a neutral position, (2) sensing a position of the pedal, (3) selecting a pre-determined velocity characteristic of the work machine based on the position of the pedal, and (4) relaying the pre-determined velocity characteristic to a prime mover of the work machine.

### Brief Description of the Drawings

Fig. 1 is a diagrammatic top view of an operator's station that embodies the principles of an embodiment of the operator interface system of the present invention.
Fig. 2 is a block diagram of the operator interface system of Fig. 1.
Figs. 3A and 3B are graphical illustrations of an embodiment of, respectively, acceleration and deceleration responses in accordance with the teachings of the present invention.
Fig. 4 is a diagrammatic top view of an operator's station that embodies the principles of another embodiment of the operator interface system of the present invention.
Fig. 5 is a diagrammatic top view of an operator's station that embodies the principles of yet another embodiment of the operator interface system of the present invention.
Fig. 6 is a diagrammatic illustration of the operator interface system of Fig. 2 shown being used with a continuously variable transmission.

### Detailed Description

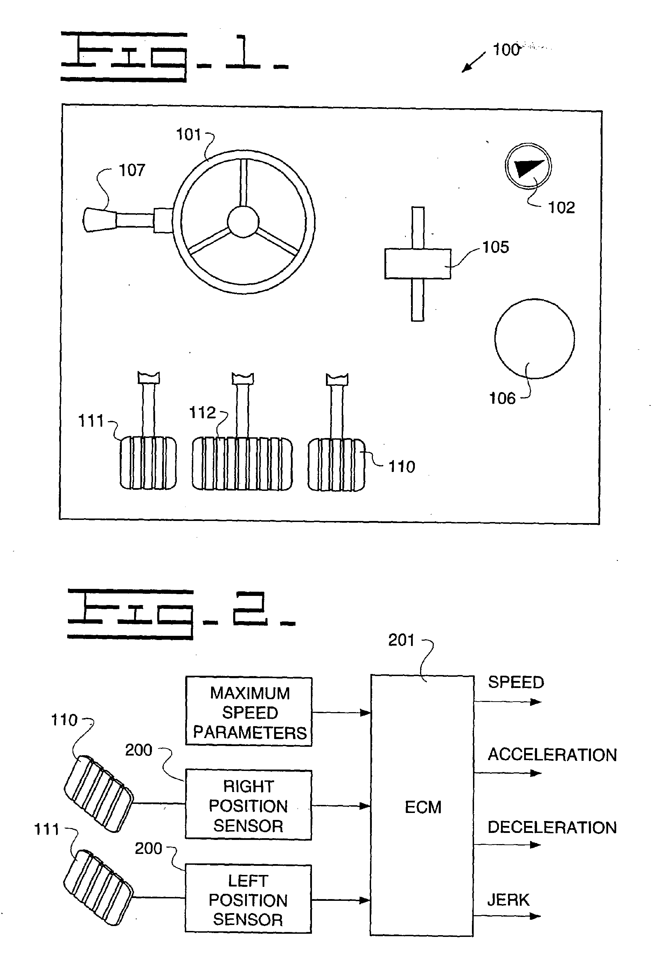

Referring to Fig. 1, a diagram of an operator station for a vehicle, denoted generally at 100, embodying an embodiment of an operator interface system is shown. As should be appreciated, all embodiments of the operator interface system described herein allow the operator to control a variety of velocity aspects of a work machine (not shown) such as velocity, acceleration, deceleration, and jerk through use of a foot operated pedals. The operator station 100 may include a steering wheel 101, a throttle control setting 102, a maximum speed setting 105, a parking brake 106, and a forward/reverse cane 107 which may be coupled to the steering wheel column (not shown).

The operator interface system includes a first pedal 110, preferably operable by one foot of the operator, and a second pedal 111 which is preferably operated by the other foot of the operator. Each of the aforementioned first and second pedals 110,111 are actuatable from a base or neutral position by operation of pressure applied by the operator's foot, and each are coupled to the work machine body by conventional methods. Once the aforementioned pressure is released, the previously depressed pedal returns to its neutral position by conventional means such as either electrical and/or mechanical and/or pneumatic and/or hydraulic, or any combination thereof. In addition, a brake 112 may be provided to stop the work machine in a conventional manner. Alternatively, the second pedal 111 may be operatively coupled to the brake 112 in a conventional manner such as, for example, a mechanical or hydromechanical interconnection (not shown). When arranged in this manner, the brake 112 is preferably activated towards the end of the travel of the second pedal 111, from its neutral position, with activation preferably occurring at about, for example, the remaining six (6) degrees of travel of the second pedal 111.

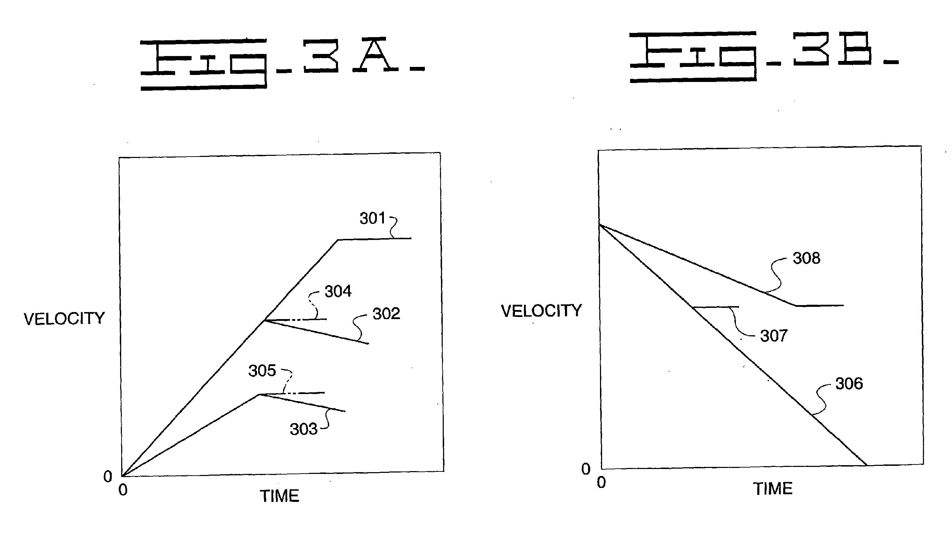

With reference to Fig. 2, the present operator interface system also includes a first position sensor and a second position sensor, both designated herein as 200, operatively connected with each respective pedal 110,111. Each sensor 200 operates in a conventional manner to sense displacement of each pedal 110,111 from each pedals respective neutral position, and to generate displacement signals based on the pedals respective positions. Each of the sensors 200 are coupled to an electronic control module (ECM) 201 and input the aforementioned displacement signals to the ECM 201 indicative of the respective displacement of the each pedal 110,111. The ECM 201 is programmed to output signals to the corresponding work machine's systems in order to control the work machine's velocity aspects such as speed, acceleration, deceleration and jerk based upon the sensed operator input settings as determined by the displacement of the pedals 110,111 from the respective neutral position.

Electronic controllers or modules such as the ECM 201 are commonly used in association with work machine-type vehicles for accomplishing a wide variety of tasks. In this regard, the ECM 201 will typically include processing means such as a microcontroller or microprocessor, associated electronic circuitry, analog circuit or programmed logic arrays, and associated memory. Thus, the ECM 201 can be programmed to control the various work machines components, to effectuate desired velocity aspects of the work machine, based on the displacement of the pedals 110,111. Programming of the ECM 201 to accomplish the aforementioned functions is preferably accomplished by mapping structures which allow the ECM 201 to sense which of the pedals 110,111 is being moved relative to its respective neutral position. Based upon the target velocity desired by the operator, as defined by the instantaneous position of a respective pedal 110,111, the mapping structures will appropriately direct the ECM 201 to accelerate or decelerate the work machine at pre-determined rates. Likewise, changes in acceleration and deceleration, or jerk, can also be controlled so as to provide for smoother operation of the work machine.

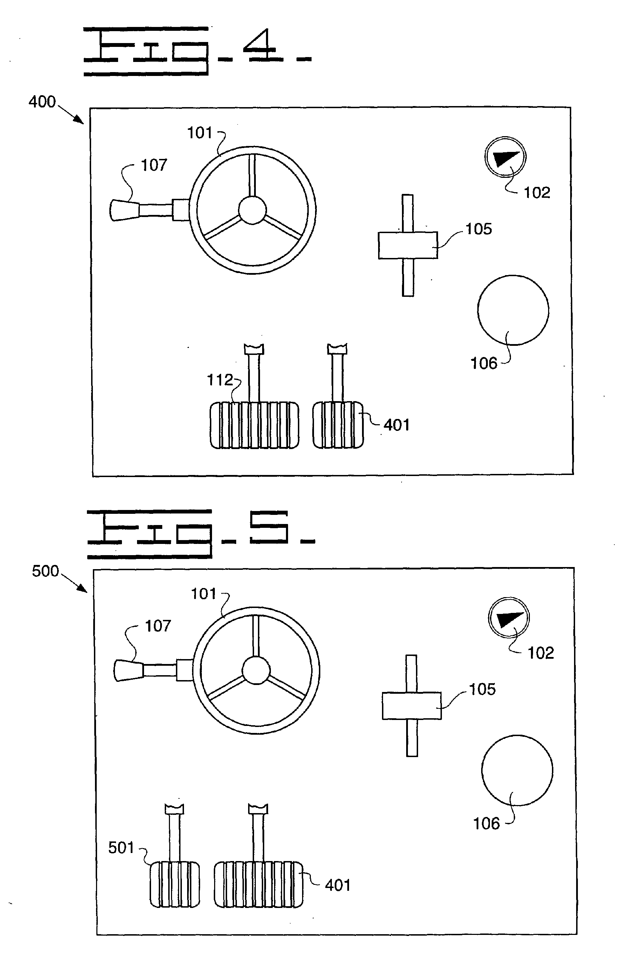

Shown in Figs. 3A and 3B are, respectively, one embodiment each of exemplary acceleration and deceleration graphs corresponding to a preferred mapping structure which can be used for any of the operator interface system embodiments described herein. However, for exemplary purposes, the Fig. 1 operator interface system embodiment will be used to describe the exemplary embodiments of the aforementioned acceleration and deceleration graphs. As shown in Fig. 3A, line 301 denotes displacing and holding at full displacement from the neutral position the first pedal 110 which results in a pre-selected maximum acceleration followed by cruising at the desired top speed velocity. Line 302 denotes full displacement and release of the first pedal 110 which results in the pre-selected maximum acceleration followed by limited pre-determined deceleration. Finally, line 303 denotes a displacement of the first pedal 110 between the neutral and full displacement positions which allows for a pre-determined intermediate acceleration followed by a pre-determined limited deceleration upon release of the first pedal 110.

As should be appreciated, the first pedal 110 may further be configured to provide the work machine with cruise control capability as represented by lines 304 and 305 in Fig. 3A (both shown in alternate detail). The cruise control function may be initiated in a conventional manner such as by actuating a toggle (not shown) or other suitable interface control. Upon such actuation, the ECM 201 is programmed to remember the position of the first pedal 110 and maintain a constant velocity associated with this position. Tapping on brake 112 releases the first pedal 110 causing the work machine to decelerate.

Turning now to Fig. 3B, and as denoted by line 306, fully displacing and holding the second pedal 111 provides for the programmed maximum deceleration rate which, if the second pedal 111 remains fully depressed, will stop the work machine. Line 307 denotes a full displacement of the second pedal 111 followed by a partial release of the second pedal 111 which results in maximum deceleration followed by intermediate speed. Finally, line 308 denotes a partial displacement of the second pedal 111 which provides for limited deceleration followed by an intermediate speed.

Alternatively, each of the aforementioned pedals 110,111 may be used to control directional movement of the work machine. Specifically, each of the pedals 110,111 may be coupled in a conventional manner to the transmission or other systems associated with work machine such that displacement of the first pedal 110 causes forward movement of the work machine. Likewise, displacement of the second pedal 111 causes the work machine to move in the reverse, or backing-up, direction. The ECM 201 can therefore be programmed to sense which pedal 110,111 is being depressed and output the appropriate signal to the work machine components to effectuate the desired movement in a controlled manner as determined by the chosen mapping structure.

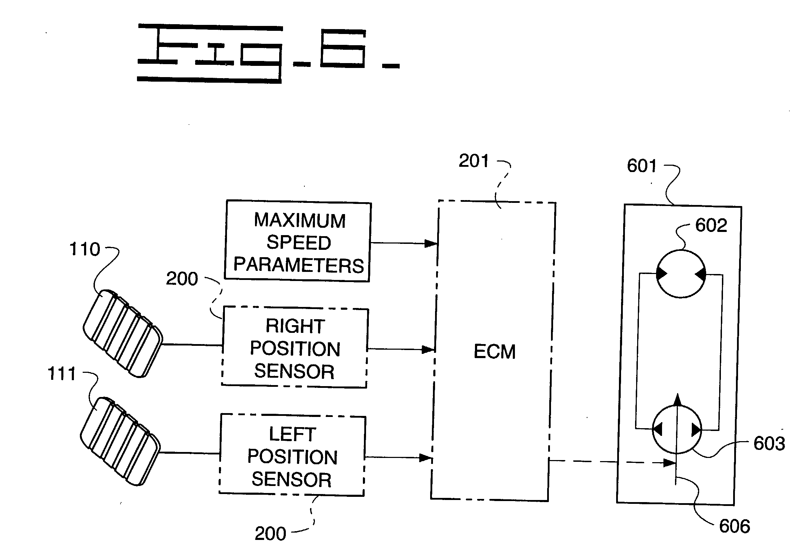

Shown in Fig. 4 is a diagrammatic illustration of another operator station, denoted generally at 400, embodying yet another embodiment of the operator interface system of the present invention. As shown, a single pedal 401 is utilized to control the acceleration and deceleration of the work machine. Specifically, fully displacing of the pedal 401 from the neutral position causes the work machine to accelerate at a pre-determined maximum acceleration. In other words, and as should be apparent to those of ordinary skill in such art, pedal 401 is used to initiate movement of the work machine. Conversely, releasing pressure on the pedal 401 causes a maximum pre-determined deceleration of the work machine. If desired, brake 112 may be used to actuate the conventional braking system so as to cause the work machine to stop. As in the previously described embodiments, the ECM 201 may contain the desired mapping structure to map the displacement of the pedal 401 with the desired velocity aspects of the work machine. The forward/reverse cane 107 may be utilized to effectuate locomotion of the work machine in either the forward or reverse directions.

Shown in Fig. 5 is a diagrammatic illustration of another operator station, denoted generally as 500, embodying still yet another embodiment of the operator interface system of the present invention. In contrast with the previously described embodiment, ECM 201 is configured to provide for maximum acceleration unless otherwise directed by the work machine operator. As shown, the present embodiment incorporates a single pedal 501, also coupled with a sensor 200, that provides the aforementioned desired deceleration. Specifically, depressing pedal 501 causes pedal position data to be sent to the ECM 201 by the position sensor 200. Upon receiving the position data, the ECM 201 decreases the velocity of the work machine at the pre-selected rate of deceleration corresponding to the pedal position. Upon releasing pressure on the pedal 501, the work machine accelerates at the maximum pre-determined acceleration rate until the selected cruising speed is obtained. As in the previously described embodiment, the forward/reverse cane 107 may be used to selectively configure the work machine for forward or reverse travel. Also, the brake 112 may be coupled to the pedal 501 in the aforementioned manner so as to actuate the braking system when the pedal 501 has been depressed from its neutral position a pre-determined amount.

Fig. 6 illustrates an exemplary transmission system, embodied herein as a hydrostatic continuously variable transmission 601, which may be used with the embodiments of the operator interface system described herein. Such transmissions 601 are conventionally known and will not be elaborated upon in any greater detail than necessary to fully teach the present invention. The transmission 601 includes a fixed displacement hydrostatic motor 602 operable by a variable and reversible hydrostatic pump 603. The reversible hydrostatic pump 603 is typically driven by the work machine engine (not shown). During operation, the speed of the engine is typically held constant with the forward and reverse ground speed of the work machine being varied through rotation of the pump swash plate 606. The motor 602, in turn, typically drives the work machine's axles (not shown).

For illustrative purposes, the centered or neutral position of the swash plate 606 is as shown in Fig. 6 and corresponds to the base or neutral position of pedal(s) 110, 111, 401, 501. Displacement of the aforementioned pedal(s) causes the aforementioned displacement signals to be relayed to the ECM 201. The ECM 201, in turn, is coupled in a conventional manner to the transmission 601 and is operable, based on pedal position, to change the angle of the swash plate 606 which results in a flow of oil through the pump 603 and motor 602 combination. As should be apparent to those skilled in such art, the greater the change in angle of the swash plate 606, the greater the speed of the motor 602 and, hence, the output speed of the transmission 601 is increased resulting in a greater ground speed of the work machine. As should be appreciated, the aforementioned mapping structures are adapted to control this rate of change of the swash plate, thereby effectively controlling the velocity, acceleration, deceleration and jerk of the work machine.

The directional movement of the work machine is controlled by the direction of angular movement of the swash plate 606. For example, a clockwise rotation of the swash plate 606 results in forward movement of the work machine; whereas, a counterclockwise rotation of the swash plate 606 results in reverse motion of the work machine. As should be apparent, for those single-pedal embodiments described above with reference to Figs. 4 and 5, and for the Fig. 1 embodiment in which both pedals 110,111 only control vehicle acceleration or deceleration, the forward/reverse cane 107 may coupled in a conventional manner to the swash plate 606 to control the swash plate's 606 direction of rotation. Alternatively, for the Fig. 1 embodiment in which pedals 110,111 are used to control locomotion of the work machine's in a forward or reverse direction, the pedals 110,111 may be coupled in a convention manner to the swash plate 606 to effectuate this directional control.

Alternatively, and with further reference to Fig. 6, each of the pedal(s) 110, 111, 401, 501 may be operatively coupled by a suitable linkage (not shown), in a conventional manner, to the swash plate 606, thereby directly providing the swash plate 606 with the aforementioned positional control. As should be apparent, such an arrangement negates the necessity for the inclusion of the ECM 201 or sensors 200 (all shown in alternate detail in Fig. 6). Accordingly, the speed and acceleration or deceleration of the work machine will be a function of the pedal position with respect to time. In addition, and as mentioned previously, the direction of rotation of the swash plate 606 may be either controlled by pedal(s) 110,111,401,501 or via the forward/reverse cane 107. It is to be understood that the showing of a dual pedal arrangement with the transmission 601 in Fig. 6 is exemplary only and that it is contemplated that any of the operator interface embodiments described herein can also be utilized.

### Industrial Applicability

With reference to the drawings, and in operation, all embodiments of the operator interface system described herein provide a means for the operator to more easily and intuitively control various velocity aspects such as speed, acceleration, deceleration and jerk of a work machine through the use of either a single or dual pedal arrangement. Displacement of each pedal 110, 111, 401, 501 from its base or neutral position causes pedal positional date to be relayed to the ECM 201 which, in turn, operatively controls the various work machine systems such as the engine and transmission systems in order to control the aforementioned velocity aspects.

Mapping structures are programmed into the ECM 201 and are used to map each pedal position with a desired velocity aspect response. In such manner, the operating characteristics of a particular type of work machine can be optimized to provide a smoother and more easily controlled ride. In addition, by allowing the operator to control the work machine by using either one or two pedals in contrast to various hand and foot operated operator interface devices simplifies the learning process for new operators.

## Claims

1. An operator interface system for a work machine operable for acceleration or deceleration either in a forward or reverse direction, comprising:
a first pedal displaceable from a neutral position;
a sensor operatively coupled with said first pedal and operable to output a displacement signal corresponding to a location of said first pedal; and
an electronic controller adapted to receive said displacement signal and to provide a pre-determined control to a velocity aspect of the work machine in response to said displacement signal.

2. The operator interface system as set forth in Claim 1 wherein said velocity aspect of said work machine includes at least one of said vehicle acceleration or vehicle deceleration.

3. The operator interface system as set forth in Claim 1 wherein said first pedal controls the work machine's acceleration.

4. The operator interface system as set forth in Claim 1 wherein said first pedal controls the work machine's deceleration.

5. The operator interface system as set forth in Claim 1 wherein said first pedal controls the forward movement of the work machine.

6. The operator interface system as set forth in Claim 1 further comprising:
a second pedal displaceable from a neutral position;
a sensor operatively coupled to said second pedal and operable to output a displacement signal corresponding to said displacement of said second pedal from said neutral position; and
an electronic controller adapted to receive said displacement signal and to provide a pre-determined control to a velocity aspect of the work machine in response to said displacement signal.

7. The operator interface system as set forth in Claim 6 wherein said second pedal controls the work machine's deceleration.

8. The operator interface system as set forth in Claim 6 wherein said second pedal controls the work machine's rearward movement.

9. The operator interface system as set forth in Claim 6 wherein:
said electronic controller is programmable; and
said electronic controller includes mapping structures adapted to provide a pre-determined velocity aspect for a given displacement of at least one of said first pedal or said second pedal.

10. The operator interface system as set forth in Claim 1 wherein said velocity aspect is jerk.

11. The operator interface system as set forth in Claim 1 further comprising a speed selector adapted to selectively control a maximum speed setting of the work machine.

12. The operator interface system as set forth in Claim 1 further comprising a cruise control function.

13. The operator interface system as set forth in Claim 1 wherein said electronic controller is programmable.

14. The operator interface system as set forth in Claim 1 including a brake operatively coupled to said first pedal.

15. The operator interface system as set forth in claim 14 wherein said brake is actuatable upon said first pedal being displaced a pre-determined distance from said neutral position.

16. An operator interface system for a work machine operable for acceleration or deceleration, comprising:
a prime mover;
a pedal displaceable from a neutral position;
a sensor operatively coupled to said pedal and operable to output a displacement signal corresponding to said displacement of said pedal from said neutral position; and
an electronic controller coupling said sensor to said prime mover and adopted to provide a pre-determined deceleration of said prime mover in response to said displacement signal.

17. The operator interface system as set forth in Claim 16 wherein said prime mover includes a continuously variable transmission.

18. An operator interface system for a work machine, comprising:
a continuously variable transmission having an output speed; and
at least one pedal displaceable from a neutral position and adapted for controlling said output speed.

19. The operator interface system as set forth in Claim 18, further comprising:
a sensor operatively coupled to said pedal and operable to output a displacement signal corresponding to the displacement of said pedal; and
an electronic controller coupling said sensor with said continuously variable transmission and adopted to provide a pre-determined control to a velocity aspect of the work machine in response to said displacement signal.

20. The operator interface system as set forth in Claim 19 wherein said electronic controller is programmable.

21. The operator interface system as set forth in Claim 19 wherein said electronic controller selectively controls a rate of change of said output speed.

22. A method for controlling locomotion characteristics of a work machine, comprising the steps of:
providing at least one pedal displaceable from a neutral position;
sensing a position of said pedal;
selecting a pre-determined velocity characteristic of the work machine based on the position of the pedal; and
relaying the pre-determined velocity characteristic to a prime mover of the work machine.

23. The method of Claim 22, wherein the prime mover includes a continuously variable transmission.

24. The method of Claim 22, wherein the velocity aspect includes at least one of work machine jerk, acceleration, deceleration, or velocity.

25. The method of Claim 22 including the step of:
providing a second pedal; and
wherein one of said pedals controls forward motion of the work machine, and the other of the pedals controls rearward motion of the work machine.

26. The method of Claim 22 including the step of:
providing a second pedal; and
wherein one of said pedals controls acceleration of the work machine, and the other of the pedals controls deceleration of the work machine.
